**Europäisches Patentamt**

**European Patent Office**

**Office européen des brevets**

(11) Veröffentlichungsnummer: **0 016 416**
**B1**

(12) # EUROPÄISCHE PATENTSCHRIFT

(45) Veröffentlichungstag der Patentschrift:
**31.08.83**

(51) Int. Cl.³: **H 04 B 17/02**

(21) Anmeldenummer: **80101284.0**

(22) Anmeldetag: **12.03.80**

(54) **Adressenfreie Fehlerortung.**

(30) Priorität: **22.03.79 DE 2911298**

(43) Veröffentlichungstag der Anmeldung:
**01.10.80 Patentblatt 80/20**

(45) Bekanntmachung des Hinweises auf die Patenterteilung:
**31.08.83 Patentblatt 83/35**

(84) Benannte Vertragsstaaten:
**AT BE CH DE FR GB IT LU NL SE**

(56) Entgegenhaltungen:
**DE-A-2 703 621**
**DE-B-2 752 541**

**Colloquium on Data Transmission Codes, aus IEE,
10.Nov.1978, Digest No. 1978151, Seiten 1/1 bis 1/5**

(73) Patentinhaber: **SIEMENS AKTIENGESELLSCHAFT,
Berlin und München Wittelsbacherplatz 2,
D-8000 München 2 (DE)**

(72) Erfinder: **Pospischil, Reginhard, Dr., Gabriel v. Seidl
Strasse 15, D-8032 Lochham (DE)**

## Adressenfreie Fehlerortung

Die Erfindung betrifft ein adressenfreies Fehlerortungsverfahren von digitalen, insbesondere von PCM-Signalen, mit Zwischenstellen, die verstärkende Regeneratoren für mindestens zwei Signalwege enthalten, mittels Übertragung eines an alle Regeneratoren des einen Signalwegs von einer ortenden Endstelle ausgesandten Vorbereitungssignals, eines Schleifenschlussbefehls und eines Prüfsignals, bei dem das über die zwischen den Regeneratoren zweier Signalwege einer Zwischenstelle gebildete Schleife zu einer auswertenden Endstelle übertragene Signal hinsichtlich Bitfehler und Signallaufzeit untersucht wird und bei dem als Schleifenschlussbefehl eine Folge von mehreren, unmittelbar aufeinanderfolgenden digitalen Nullzeichen, die um ganzzahlige Vielfache grösser ist als die im Übertragungscode je Block kleinste, nicht vorkommende Nullfolge, ausgesendet wird, mit einer sendeseitigen Reihenschaltung eines Ortungssignalsenders, eines Verwürflers und eines umschaltbaren Alphabetcodewandlers, der Blöcke mit m Eingangszeichen in Blöcke mit n Ausgangszeichen umwandelt und mit einer empfangsseitigen Reihenschaltung eines Alphabetcode-Rückwandlers und eines Entwürflers zur Rückwandlung des empfangenen Signals.

Der Bedarf nach Übertragungsstrecken für digitale Signale macht es erforderlich, die digitalen Signale über bereits vorhandene und beispielsweise bisher für Trägerfrequenzübertragung genutzte Kabelstrecken mit unterschiedlichen Übertragungscharakteristiken zu übertragen. In Gebieten, in denen die vorhandenen Kabelstrecken nicht ausreichen, werden ausserdem neue Übertragungskabel mit sehr hoher Übertragungskapazität, beispielsweise Lichtwellenleiter-Übertragungssysteme, eingerichtet. Für eine optimale Nachrichtenübertragung ist es dabei notwendig, die zu übertragenden Signale durch eine geeignete Codierung an die Übertragungsstrecke anzupassen. Im Hinblick auf eine Fehlerortung bedeutet dies aber, dass in einer ortenden Endstelle, von der unterschiedliche Übertragungssysteme ausgehen, ein erheblicher Aufwand zur Durchführung der verschiedenen, für die Übertragungssysteme vorgesehenen Fehlerortungsverfahren besteht. Der unterschiedliche Aufwand ergibt sich dabei insbesondere hinsichtlich der Erzeugung des jeweiligen Ortungsimpulsmusters, das an die in den Leitungsendgeräten vorhandenen Verwürfler und Codewandler angepasst sein muss, damit an die Übertragungsstrecke der vorgesehene Schleifenschlussbefehl abgegeben wird.

Aus der DE-A-2 703 621 ist bereits ein adressenfreies Fehlerortungsverfahren für PCM-Übertragungsstrecken der einleitend geschilderten Art bekannt. Bei diesem adressenfreien Fehlerortungsverfahren wird sendeseitig ein Prüfsignalgenerator verwendet, der aus einem Pseudozufallsgenerator besteht und periodisch eine Pseudozufallsfolge mit einer Periodenlänge von 60 Bit an einen nachgeschalteten Verwürfler abgibt. Von diesem Verwürfler wird ein Signal mit einer Periodenlänge von 7620 Bit erzeugt, in dem sich einmal eine Folge von zwölf aufeinanderfolgender Nullbits befindet. Diese Folge von zwölf Nullbits wird in einem nachgeschalteten Alphabetcodewandler in eine Folge von drei Blöcken aus je drei ternären Nullzeichen umgesetzt. Damit der Verwürfler die Folge von zwölf aufeinanderfolgenden Nullbits erzeugen kann, sind Prüfsignalgenerator oder/und Verwürfler in Abhängigkeit voneinander zu setzen, ausserdem ist auch der Alphabetcodewandler bei Beginn der Folge von zwölf aufeinanderfolgenden Nullbits zu setzen. Das Setzen von Alphabetcodewandler, Verwürfler und Prüfsignalgenerator erfordert insbesondere für die Signalerkennung einen erheblichen Aufwand, ausserdem können sich Schwierigkeiten bei höheren Schrittgeschwindigkeiten ergeben.

Aus der Veröffentlichung «Colloquium on Data Transmission Codes» aus IEE, 10. Nov. 1978, Seiten 1/1 bis 1/5 ist die Verwendung von Alphabetcodes für Übertragungsstrecken für digitale Signale bekannt.

Die Aufgabe der Erfindung besteht also darin, ein adressenfreies Fehlerortungsverfahren der eingangs erwähnten Art anzugeben, das möglichst universell einsetzbar ist und mit möglichst geringem Aufwand hinsichtlich des Setzens des verwendeten Alphabetcodewandlers, Verwürflers und Ortungsimpulsmustergenerators auskommt. Erfindungsgemäss wird die Aufgabe dadurch gelöst, dass sendeseitig ein Ortungsimpulsmuster erzeugt wird, das durch periodische Aufeinanderfolge von aus acht digitalen Nullzeichen und vier digitalen Einszeichen bestehenden Worten gebildet wird, dass das erzeugte Ortungsimpulsmuster mittels eines an sich bekannten selbstsynchronisierenden Verwürflers so verwürfelt wird, dass das verwürfelte Ortungsimpulsmuster in periodischen Abständen eine Folge von 15 aufeinanderfolgenden digitalen Nullzeichen enthält, dass dieses Signal dem umschaltbaren Alphabetcodewandler zugeführt wird, der beim Auftreten der 15 aufeinanderfolgenden digitalen Nullzeichen eine ganzzahlige Anzahl Blöcke mit n Nullzeichen abgibt, dass dabei die ausgangsseitige Anzahl der Blöcke mit n Nullzeichen den Wert $\frac{15}{m}$ nicht überschreitet, dass die Blöcke mit n Nullzeichen als Schleifenschlussbefehl an die Übertragungsstrecke abgegeben werden, dass der selbstsynchronisierende Verwürfler insgesamt sieben Stufen umfasst und ein Signal mit einer Periode von $2^7-1$ Bit abgibt und dass die Periode des verwürfelten Ortungsimpulsmusters eine Länge von 1524 Bit hat. Der Hauptvorteil des erfindungsgemässen Verfahrens liegt darin, dass ein sehr einfaches Ortungsimpulsmuster Verwendung findet und deshalb auch nur ein sehr einfacher Ortungsgenerator benötigt wird und dass ausserdem in das einfache Ortungsimpulsmuster auch eine leichte Einblendung von Fehlerbits zur Laufzeitmessung und zur Fehlerzählung möglich ist. Die universelle Einsetzbarkeit des erfindungsgemässen adressenfreien Fehlerortungsverfahrens ergibt sich dadurch, dass es sowohl für ternäre Übertragungssysteme mit im Vergleich zum binären Eingangssignal reduzierter Schrittgeschwindigkeit als auch für binäre Systeme mit im Vergleich zum binären Eingangssignal erhöhter Schrittgeschwindigkeit geeignet ist.

Der genannte Verwürfler ist so eingerichtet, dass möglicherweise entstehende Kurzperioden bis zu einer Länge von 12 Bit selbsttätig unterdrückt werden, so dass bei einer Wortlänge des Ortungsimpulsmusters von 12 Bit eine Störung des Verwürflers nicht zu befürchten ist.

Sehr häufig ergibt sich die Notwendigkeit, die Schrittgeschwindigkeit über die Übertragungsstrecke durch Umwandlung der binären Eingangssignale in ternäre Ausgangssignale zu verringern. Für diesen Fall ist vorgesehen, dass der umschaltbare Alphabetcodewandler eine 4 B 3T-Umwandlung durchführt und aus den 15 aufeinanderfolgenden digitalen Nullzeichen drei Blöcke mit je drei digitalen Nullzeichen bildet. Zur Reduzierung der Schrittgeschwindigkeit ist es auch möglich, dass der umschaltbare Alphabetcodewandler (Acod) eine 6 B 4T-Umwandlung durchführt und aus den 15 aufeinanderfolgenden digitalen Nullzeichen zwei Blöcke mit je vier digitalen Nullzeichen bildet. In diesen beiden Fällen ergibt sich bei Anwendung des erfindungsgemässen adressenfreien Fehlerortungsverfahrens aufgrund der Tatsache, dass von den 15 zur Verfügung stehenden Nullzeichen nur 12 benötigt werden, eine leichtere Synchronisierung.

Im Hinblick auf den Einsatz von Lichtwellenleitersystemen ist eine Variante des erfindungsgemässen Verfahrens zweckmässig, bei der der umschaltbare Alphabetcodewandler eine 5 B 6B-Umwandlung durchführt und aus den 15 aufeinanderfolgenden digitalen Nullzeichen höchstens drei Blöcke mit je sechs Nullzeichen bildet.

Bei der Einblendung von Fehlerbits zur Laufzeitbestimmung und zur Fehlerratenbestimmung besteht die Forderung, dass durch diese Fehlerbits keine Änderung der Scrambler-Periode, also keine Phasensprünge erfolgen. Im Hinblick darauf ergibt sich eine Weiterbildung des erfindungsgemässen Verfahrens, bei der bei Verwendung eines selbstsynchronisierenden Verwürflers mit r Rückkopplungswegen im Ortungsimpulsmuster periodisch r + 1 Bit oder Vielfache davon invertiert abgegeben werden. Zur leichteren Durchführung der Einblendung ist es zweckmässig, die Verfahren entsprechend den Patentansprüchen 7 und 8 zu verwenden.

Die Erfindung soll im folgenden anhand der Zeichnung näher erläutert werden.

Die Zeichnung zeigt ein Leitungsendgerät mit einem Ortungsgenerator.

Das Leitungsendgerät erhält über eine digitale Schnittstelle DS binäre Eingangssignale, die dem Schnittstellenempfänger SE zugeführt werden, ausserdem werden vom Schnittstellensender SS die Ausgangssignale an die digitale Schnittstelle DS abgegeben. An den Schnittstellenempfänger schliesst sich die Sendeseite des Leitungsendgerätes an, die in Reihe einen selbstsynchronisierenden Verwürfler Scr, einen Alphabetcodewandler Acod und einen Pulsformer PF enthält. Empfangsseitig enthält das Leitungsendgerät einen Impulsregenerator R, einen diesem nachgeschalteten Alphabetcode-Rückwandler Adec, der sein Ausgangssignal an einen Entwürfler DScr abgibt. Die Ausgangssignale des Entwürflers gelangen einmal zum Ortungsempfänger im Ortungsgerät OG und zum anderen über einen steuerbaren Schalter S2 zum Schnittstellensender SS. Mit dem Eingang des Schnittstellensenders SS ist ausserdem der Ausgang eines im Ortungsgerät OG befindlichen Ortungssignalsenders verbunden, der Ausgang des Schnittstellensenders ist ausserdem mit dem Eingang des Schnittstellenempfängers über einen gesteuerten ersten Schalter S1 verbunden. Durch das Ortungsgerät werden die gesteuerten Schalter S1, S2 und die umschaltbaren Alphabetcodewandler gesteuert.

Der verwendete Schnittstellenempfänger SE dient zur Pegelanpassung und zur Codeanpassung an die Übertragungsstrecke L. Als selbstsynchronisierender Verwürfler Scr findet ein aus der CCITT-Empfehlung V27bis bekannter Verwürfler mit einer Periode von $2^7-1$ Bit Verwendung, das verwürfelte Ortungsimpulsmuster hat dann eine Periode von 1524 Bit. Als Alphabetcodewandler wird im vorliegenden Falle ein solcher für einen modifizierten MS43-Code verwendet, bei diesem Code handelt es sich um einen Code zur Umwandlung von vier binären in drei ternäre Signale. Entsprechend der Coderegel kann dabei der Alphabetcodewandler eine Folge von 15 Nullzeichen normalerweise nicht verarbeiten. Aus diesem Grunde wird der Alphabetcodewandler vom Ortungsgerät aus gesteuert umgeschaltet, im umgeschalteten Zustand ist der Alphabetcodewandler in der Lage, 12 binäre Nullzeichen in neun ternäre Nullzeichen umzuwandeln. In der vom Verwürfler Scr abgegebenen Ortungssignalfolge treten ausser der einen Folge von 15 Nullzeichen nur Folgen mit maximal sieben Nullzeichen auf, die gerade noch ohne Umschaltung vom Alphabetcodewandler umgeformt werden können.

Der Pulsformer PF dient zur Erzeugung der Leitungsimpulse.

Empfangsseitig enthält das Leitungsgerät einen an sich bekannten Impulsregenerator R mit Entzerrer, Amplitudenregenerator und einem Zeitregenerator, sowie einer Taktableitung. Im nachgeschalteten umschaltbaren Alphabetcode-Rückwandler Adec werden die ternären Signale in binäre Signale in der Art umgewandelt, dass drei ternären Signalen vier binäre Signale entsprechen. Auch dieser Alphabetcodewandler wird vom Ortungsgerät aus gesteuert umgeschaltet, damit zur Fehlerauswertung eine Rückübertragung des Schleifenschlussbefehls erfolgen kann. Der Entwürfler ist entsprechend dem sendeseitigen Verwürfler aufgebaut, es wird also die gleiche Pseudozufallsfolge zum Eingangssignal des Entwürflers modulo-2-addiert. Das Ausgangssignal des Entwürflers wird dem Ortungsempfänger im Ortungsgerät OG zugeführt und dort mit dem ausgesendeten Signal verglichen. Im normalen Betrieb wird durch das Ortungsgerät gesteuert der Schalter S2 geschlossen, so dass in diesem Falle die Ausgangssignale des Entwürflers zum Schnittstellensender und über diesen zur digitalen Schnittstelle gelangen können. Im Ortungsfall ist der Schalter S2 geöffnet. Der Entwürfler gibt dann nur an den Ortungsempfänger Ausgangssignale ab. Der Ortungssignalsender gibt in dieser Zeit Ortungsimpulsmuster an den Schnittstellensender ab, dort erfolgt eine entsprechende Umsetzung des Ortungsimpulsmusters. Im Ortungsfall ist auch der erste Schalter S1 geschlossen, so dass das ungesetzte Ortungsimpulsmuster vom Ausgang des Schnittstellensenders SS zum Eingang des Schnittstellenempfängers SE gelangen kann. Im Schnittstellenempfänger werden die durch den Schnittstellensender bewirkten Veränderungen des Ortungsimpulsmusters wieder aufgehoben und das Ortungsimpulsmuster dem Verwürfler Scr zugeführt. Durch die Schleifung des Ortungsimpulsmusters über den Schnittstellensender und den Schnittstellenempfänger werden die in diesen Einrichtungen enthaltenen Umcodierer ebenfalls mit von dem Ortungsimpulsmuster durchlaufen und dadurch ebenfalls mitüberwacht.

Die eigentliche Fehlerortung und Überwachung erfolgt in der Weise, dass in Abhängigkeit von dem verwendeten selbstsynchronisierenden Verwürfler mit r Rückkopplungswegen im Ortungsimpulsmuster periodisch $r+1$ oder Vielfache davon invertiert abgegeben werden. Im vorliegenden Falle werden also wahlweise drei oder sechs Bit des Ortungsimpulsmusters wortsynchron in jeder für die Funktionskontrolle und die Laufzeitmessung gewählten Periode zum Sollzustand invertiert. Praktisch bedeutet dies, dass nach jeweils 10 000 Worten des Original-Ortungsimpulsmusters ein Wort der Folge 001010000000 eingeschoben wird. Durch dieses Ersatzwort ändert sich am Ausgang des Verwürflers die Ortungssignalfolge nur für 12 Bit ohne weitere Störung der Periode des Verwürflers. Dieses Impulsmuster wird im vorliegenden Falle auch zur Funktionskontrolle verwendet. Es ergibt sich bei einem bitweisen Vergleich mit dem unveränderten Ortungsimpulsmuster auf der Empfangsseite damit eine genormte Fehlerquote von $5.10^{-5}$.

Es ist weiterhin möglich, die Einfügeperiode zu verändern, so dass nicht nach 10 000, sondern beispielsweise nach 100 000 Worten erst das Ersatzwort in das Ortungsimpulsmuster eingesetzt wird.

## Patentansprüche

1. Adressenfreies Fehlerortungsverfahren für Übertragungsstrecken von digitalen, insbesondere von PCM-Signalen, mit Zwischenstellen, die verstärkende Regeneratoren für mindestens zwei Signalwege enthalten, mittels Übertragung eines an alle Regeneratoren des einen Signalwegs von einer ortenden Endstelle ausgesandten Vorbereitungssignals, eines Schleifenschlussbefehls und eines Prüfsignals, bei dem das über die zwischen den Regeneratoren zweier Signalwege einer Zwischenstelle gebildete Schleife zu einer auswertenden Endstelle übertragene Signal hinsichtlich Bitfehler und Signallaufzeit untersucht wird und bei dem als Schleifenschlussbefehl eine Folge von mehreren, unmittelbar aufeinanderfolgenden digitalen Nullzeichen, die um ganzzahlige Vielfache grösser ist als die im Übertragungscode je Block kleinste, nicht vorkommende Nullfolge, ausgesendet wird, mit einer sendeseitigen Reihenschaltung eines Ortungssignalsenders (OG), eines Verwürflers (Scr) und eines umschaltbaren Alphabetcodewandlers (Acod), der Blöcke mit m Eingangszeichen in Blöcke mit n Ausgangszeichen umwandelt und mit einer empfangsseitigen Reihenschaltung eines Alphabetcode-Rückwandlers (Adec) und eines Entwürflers (DScr) zur Rückwandlung des empfangenen Signals, dadurch gekennzeichnet, dass sendeseitig ein Ortungsimpulsmuster erzeugt wird, das durch periodische Aufeinanderfolge von aus acht digitalen Nullzeichen und vier digitalen Einszeichen bestehenden Worten gebildet wird, dass das erzeugte Ortungsimpulsmuster mittels eines an sich bekannten selbstsynchronisierenden Verwürflers (Scr) so verwürfelt wird, dass das verwürfelte Ortungsimpulsmuster in periodischen Abständen eine Folge von 15 aufeinanderfolgenden digitalen Nullzeichen enthält, dass dieses Signal dem umschaltbaren Alphabetcodewandler (Acod) zugeführt wird, der beim Auftreten der 15 aufeinanderfolgenden digitalen Nullzeichen eine ganzzahlige Anzahl Blöcke mit n Nullzeichen abgibt, dass dabei die ausgangsseitige Anzahl der Blöcke mit n

Nullzeichen den Wert $\frac{15}{m}$ nicht überschreitet, dass die Blöcke mit n Nullzeichen als Schleifenschlussbefehl an die Übertragungsstrecke abgegeben werden, dass der selbstsynchronisierende Verwürfler (Scr) insgesamt sieben Stufen umfasst und ein Signal mit einer Periode von $2^7-1$ Bit abgibt und dass die Periode des verwürfelten Ortungsimpulsmusters eine Länge von 1524 Bit hat.

2. Adressenfreies Fehlerortungsverfahren nach Patentanspruch 1, dadurch gekennzeichnet, dass der umschaltbare Alphabetcodewandler (Acod) eine 4 B 3T-Umwandlung durchführt und aus den 15 aufeinanderfolgenden digitalen Nullzeichen drei Blöcke mit je drei digitalen Nullzeichen bildet.

3. Adressenfreies Fehlerortungsverfahren nach Patentanspruch 1, dadurch gekennzeichnet, dass der umschaltbare Alphabetcodewandler (Acod)eine 5 B 6B-Umwandlung durchführt und aus den 15 aufeinanderfolgenden digitalen Nullzeichen höchstens drei Blöcke mit je sechs Nullzeichen bildet.

4. Adressenfreies Fehlerortungsverfahren nach Patentanspruch 1, dadurch gekennzeichnet, dass bei Verwendung eines selbstsynchronisierenden Verwürflers (Scr) mit r Rückkopplungswegen im Ortungsimpulsmuster periodisch r+1 Bit oder Vielfache davon invertiert abgegeben werden.

5. Adressenfreies Fehlerortungsverfahren nach Patentanspruch 4, dadurch gekennzeichnet, dass sendeseitig im Ortungsimpulsmuster periodisch ein aus acht Nullzeichen und vier Einszeichen bestehendes Wort durch ein Ersatzwort mit der Folge 001010000000 ersetzt wird.

6. Adressenfreies Fehlerortungsverfahren nach Patentanspruch 5, dadurch gekennzeichnet, dass das Ersatzwort nach jeweils 10 000 Worten des Ortungsimpulsmusters eingesetzt wird.

## Claims

1. Address-free fault locating method for transmission links for digital, in particular PCM signals, comprising intermediate stations which contain amplifying regenerators for at least two signal paths, by the transmission of a preparation signal which is transmitted to all the regenerators in the first signal path from a locating end station, a loop closure command, and a test signal, where the signal which is transmitted via the loop, formed between the regenerators of two signal paths of an intermediate station, to an analysing end station is checked in respect of bit errors and signal transit time, and where a sequence of a plurality of directly consecutive digital zero symbols, which exceeds the minimum nonoccurring zero sequence in each block in the transmission code by a whole numbered multiple, is transmitted by way of loop closure command, with a transmitting-end series circuit comprising a locating signal transmitter (OG), a scrambler (Scr), and a switchable alphabet code converter (Acod) which converts blocks comprising m input symbols into blocks comprising n output symbols, and with a receiving-end series circuit comprising an alphabet code reconverter (Adec) and a descrambler (DScr) for the reconversion of the received signal, characterised in that at the transmitting end a locating pulse pattern is produced which is formed by a periodic sequence of words comprising eight digital zero symbols and four digital one symbols, that the produced locating pulse pattern is scrambled by means of a self-synchronising scrambler (Scr) known per se, in such manner that the scrambled locatting pulse pattern contains at periodic intervals, a sequence of fifteen consecutive digital zero symbols, that this signal is fed to the switchable alphabet code converter (Acod) which, on the occurrence of the fifteen consecutive digital zero symbols, emits a whole number of blocks comprising n zero symbols, that here the output-end number of blocks comprising n zero symbols does not exceed the value $\frac{15}{m}$, that the blocks comprising n zero symbols are emitted as loop closure command to the transmission link, that the self-synchronising scrambler (Scr) includes a total of seven stages and emits a signal having a period of $2^7-1$ bit und that the period of the scrambled locating pulse pattern has a length of 1524 bits.

2. Address-free fault locating method as claimed in patent claim 1, characterised in that the switchable alphabet code converter (Acod) effects a 4 B 3T-conversion and from the 15 consecutive digital zero symbols forms three blocks each comprising three digital zero symbols.

3. Address-free fault locating method as claimed in patent claim 1, characterised in that the switchable alphabet code converter (Acod) effects a 5 B 6B-conversion and from the 15 consecutive digital zero symbols forms at most three blocks each comprising six zero symbols.

4. Address-free fault locating method as claimed in patent claim 1, characterised in that when a selfsynchronising scrambler (Scr) is used with r feedback paths, in the locating pulse pattern periodically r+1 bits or multiples thereof are emitted in inverted form.

5. Address-free fault locating method as claimed in patent claim 4, characterised in that at the transmitting end in the locating pulse pattern, periodically a word consisting of eight zero symbols and four one symbols is replaced by a substitute word comprising the sequence 001010000000.

6. Address-free fault locating method as claimed in patent claim 5, characterised in that the substitute word is inserted after every 10 000 words of the locating pulse pattern.

## Revendications

1. Procédé de localisation de défauts sans adresse pour des sections de transmission de signaux numériques, notamment de signaux PCM, du type comportant des postes intermédiaires qui contiennent des régénérateurs amplificateurs pour au moins deux voies de signaux, au moyen de la transmission d'un signal de préparation envoyé à tous les régénérateurs d'une des voies de signaux à partir d'un poste terminal de localisation, d'un ordre de fermeture en boucle et d'un signal de contrôle, suivant lequel le signal qui est transmis à un poste terminal d'évaluation, par l'intermédiaire de la boucle formée entre les régénérateurs de deux voies de signaux d'un poste intermédiaire, est contrôlé en ce qui concerne les erreurs de bits et le temps de propagation du signal, et suivant lequel on émet, en tant qu'ordre de fermeture en boucle, une séquence de plusieurs signaux numériques zéro, se suivant directement, qui est plus grande, d'un facteur égal à un multiple entier, que la séquence de zéro minimal qui ne se présente pas dans le code de transmission pour chaque bloc, du type comportant côté émission un circuit série comprenant un émetteur de signaux de localisation (OG), un circuit brouilleur (Scr) et un convertisseur de code alphanumérique (Acod) commutable qui convertit des blocs comportant m signaux d'entrée en blocs comportant n signaux de sortie, ainsi que, côté réception, un circuit série comprenant un reconvertisseur de code alphanumérique (Adec) et un circuit de suppression de brouillage (DScr) pour la transformation inverse du signal reçu, caractérisé par le fait que, côté émission, est produit un modèle d'impulsions de localisation qui est formé par une succession périodique de mots constitués par huit signaux numériques zéro et quatre signaux numériques 1, que le modèle d'impulsions de localisation produit est brouillé, au moyen d'un circuit brouilleur auto-synchronisé (Scr) connu en soi, de manière que le modèle d'impulsions de localisation brouillé contienne, à des intervalles périodiques, une séquence de 15 signaux numériques zéro successifs, que ce signal est appliqué au convertisseur de code alphanumérique commutable (Acod) qui, à l'apparition des 15 signaux numériques zéro successifs, délivre un nombre entier de blocs comportant n signaux zéro, que ce faisant le nombre de blocs, côté sortie, qui comporte n signaux zéro ne dépasse pas la valeur 15/m, que les blocs comportant n signaux zéro sont délivrés à la section de transmission en tant qu'ordre de fermeture en boucle, que le circuit brouilleur auto-synchronisé (Scr) comprend au total sept étages et délivre un signal possédant une période de $2^7-1$ bits, et que la période du modèle d'impulsions de localisation brouillé possède une longueur de 1524 bits.

2. Procédé de localisation de défauts sans adresse, suivant la revendication 1, caractérisé par le fait que le convertisseur de code alphanumérique commutable (Acod) effectue une conversion 4 B 3T et forme à partir des 15 signaux numériques zéro successifs, trois blocs comportant respectivement trois signaux numériques zéro.

3. Procédé de localisation de défauts sans adresse suivant la revendication 1, caractérisé par le fait que le convertisseur de code alphanumérique commutable (Acod) effectue une conversion 5 B 6B et forme à partir des 15 signaux numériques zéro successifs au maximum trois blocs comportant respectivement six signaux zéro.

4. Procédé de localisation de défauts sans adresse suivant la revendication 1, caractérisé par le fait que lors de l'utilisation d'un circuit brouilleur autosynchronisé (Scr) comportant r voies de contre-réaction, dans le réseau d'impulsions de localisation sont délivrés périodiquement de façon inversée r + 1 bits ou des multiples de cette valeur.

5. Procédé de localisation de défauts sans adresse suivant la revendication 4, caractérisé par le fait que, côté émission, dans le modèle d'impulsions de localisation un mot constitué par huit signaux zéro et quatre signaux 1 est remplacé périodiquement par un mot de remplacement formé par la séquence 001010000000.

6. Procédé de localisation de défauts sans adresse suivant la revendication 5, caractérisé par le fait que le mot de remplacement est introduit après tous les 10 000 mots du modèle d'impulsions de localisation.